# EUROPEAN PATENT SPECIFICATION

(11) **EP 2 963 962 B1**
(45) Date of publication and mention of the grant of the patent: **27.01.2021**
(21) Application number: 14757775.3
(22) Date of filing: 19.02.2014
(51) Int. Cl.: H04L 5/00

(54) **MOBILE STATION**
MOBILSTATION
STATION MOBILE

(30) Priority: 26.02.2013 JP 2013035877
(43) Date of publication of application: 06.01.2016
(73) Proprietor: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP)
(74) Representative: Hoffmann Eitle
(86) International application number: PCT/JP2014/053909
(87) International publication number: WO 2014/132860

(56) References cited:
- TAKEHIRO NAKAMURA ET AL: "Trends in small cell enhancements in LTE advanced", IEEE COMMUNICATIONS MAGAZINE, IEEE SERVICE CENTER, PISCATAWAY, US, vol. 51, no. 2, 14 February 2013 (2013-02-14), pages 98-105, XP011493788, ISSN: 0163-6804, DOI: 10.1109/MCOM.2013.6461192
- HIROYUKI ISHII ET AL: "A novel architecture for LTE-B :C-plane/U-plane split and Phantom Cell concept", 2012 IEEE GLOBECOM WORKSHOPS (GC WKSHPS 2012) : ANAHEIM, CALIFORNIA, USA, 3 - 7 DECEMBER 2012, IEEE, PISCATAWAY, NJ, 3 December 2012 (2012-12-03), pages 624-630, XP032341446, DOI: 10.1109/GLOCOMW.2012.6477646 ISBN: 978-1-4673-4942-0
- NEW POSTCOM: "Evaluation assumptions for enhancement for UE-specific", 3GPP DRAFT; R1-130186 SMALL CELL DMRS REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 18 January 2013 (2013-01-18), XP050663353, Retrieved from the Internet: URL:http://www.3gpp.org/ftp/tsg_ran/WG1_RL 1/TSGR1_72/Docs/ [retrieved on 2013-01-18]
- RESEARCH IN MOTION ET AL: "Discussion on Protocol Stack Support in Small Cell eNB", 3GPP DRAFT; R2-130068 - SMALL CELL PROTOCOL STACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20130128 - 20130201 18 January 2013 (2013-01-18), XP050668135, Retrieved from the Internet: URL:http://www.3gpp.org/ftp/tsg_ran/WG2_RL 2/TSGR2_81/Docs/ [retrieved on 2013-01-18]
- NTT DOCOMO, INC.: 'Requirements, Candidate Solutions & Technology Roadmap for LTE Rel-12 Onward' 3GPP WORKSHOP ON RELEASE 12 AND ONWARDS RWS-120010 12 June 2012, XP055176152
- NTT DOCOMO: 'Scenario and Candidate Technologies for Small Cell Enhancement' 3GPP TSG RAN WG1 MEETING #72 RL-130402 01 February 2013, XP050663686
- NTT DOCOMO: 'Physical Layer Design for Dual Connectivity' 3GPP TSG RAN WG1 MEETING #72BIS RL-131427 19 April 2013, XP050697272
- "3rd Generation Partnership Project; Technical Specification Group Radio Access Network; Evolved Universal Terrestrial Radio Access (E-UTRA); Medium Access Control (MAC) protocol specification (Release 11)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.1.0, 2 January 2013 (2013-01-02), pages 1-57, XP050691624, [retrieved on 2013-01-02]

## Description

### TECHNICAL FIELD

The present invention relates to a mobile station and a mobile communication system.

### BACKGROUND ART

In LTE (Long Term Evolution) Release 10, a type of CA (carrier aggregation), i.e., " intra-eNB CA" has been introduced in order to realize broadband communications exceeding 20MHz (e.g., communications in 100MHz). In "intra-eNB CA", communications are performed while multiple CCs (component carriers) under control of the same radio base station eNB are aggregated.

Then, in LTE Release 12 and beyond, "small cell enhancement" has been proposed, and the introduction of "inter-eNB CA" is currently under study as one type of network architecture more flexible than ever. In "inter-eNB CA", communications are performed while multiple CCs (cells) under control of different radio base stations eNB are aggregated.

For example, in one of conceivable operations using "inter-eNB CA, " communication of a control signal (C-plane signal) requiring reliability is performed in a cell #1 (macro cell) under control of a radio base station eNB#1 via an SRB (signaling radio bearer), and communication of a user data signal (U-plane signal) requiring broadband communication is performed in a cell #11 (small cell) under control of a radio base station eNB#11 via a DRB (Data Radio Bearer).

### PRIOR ART DOCUMENT

### NON-PATENT DOCUMENT

Non-patent document 1: 3GPP TS36.300

In the paper "Trends in Small cell Enhancements in LTE Advanced" (IEEE Communications Magazine, vol. 51, no. 2, pages 98-105, 14 February 2013), Takehiro Nakamura et al. describe design principles and discussions on small cell enhancements in LTE Release 12, and introduce the Phantom Cell Concept proposed by NTT DOCOMO as a potential deployment considerations of enhanced LTE small cells. In the Phantom Cell Concept, macro-assisted small cells are used to split the C-plane and theU-plane. The C-plane of UE in small cells is provided by a macrocell, while for UE in macrocells both the C-plane and U-plane are provided by the serving macrocell in a conventional way.

### SUMMARY OF THE INVENTION

However, there are problems that, at present, no study has been carried out on what kind of operation scenario is appropriate for "inter-eNB CA," and no study has been carried out on the specification of a mobile station UE required for realizing the scenario either.

The present invention has been therefore made in view of the above problems and an objective thereof is to provide a mobile station and a mobile communication system capable of performing an appropriate operation for "inter-eNB CA."

According to the present invention, there is provided a mobile station configured to carry out inter-eNB carrier aggregation, CA, as set out in Claim 1.

The invention is defined and limited by the scope of the appended claims. In the following description, any embodiment(s) referred to and not falling within the scope of the appended claims, is (are) merely example(s) useful to the understanding of the invention.

### BRIEF DESCRIPTION OF THE DRAWINGS

[Fig. 1] Fig. 1 is an overall configuration diagram of a mobile communication system according to a first background example useful for understanding the present invention.
[Fig. 2] Fig. 2 is a functional block diagram of a mobile station according to the first embodiment of the present invention.
[Fig. 3] Fig. 3 is a chart for explaining a method of judging a target for signal transmission, the judgment being made by the mobile station according to the first embodiment of the present invention.
[Fig. 4] Fig. 4 is a chart for explaining a method of judging a target for signal transmission, the judgment being made by the mobile station according to the first embodiment of the present invention.
[Fig. 5] Fig. 5 is a chart for explaining a method of judging a target for signal transmission, the judgment being made by the mobile station according to the first embodiment of the present invention.
[Fig. 6] Fig. 6 is a flowchart illustrating the workings of the mobile station according to the first embodiment of the present invention.
[Fig. 7] Fig. 7 is an overall configuration diagram of a mobile communication system according to a first modified background example useful for understanding the present invention.

### MODE FOR CARRYING OUT THE INVENTION

There is described herein a mobile station including: a generation unit configured to generate a signal to be transmitted; and a judgment unit configured to change a target radio base station for transmission of the signal based on a type of the signal.

There is also described herein a mobile communication system including a first radio base station and a second radio base station. Here, the first radio base station controls a macro cell, the second radio base station controls a small cell, in downlink, the first radio base station transmits a user data signal to a mobile station, in uplink, the mobile station transmits a user data signal to the second radio base station, an acknowledgment signal for the user data signal in the downlink is transmitted from the mobile station to the first radio base station, and an acknowledgment signal for the user data signal in the uplink is transmitted from the second radio base station to the mobile station.

### (Mobile Communication System according to First Background Example and Mobile Station according to First Embodiment of Present Invention)

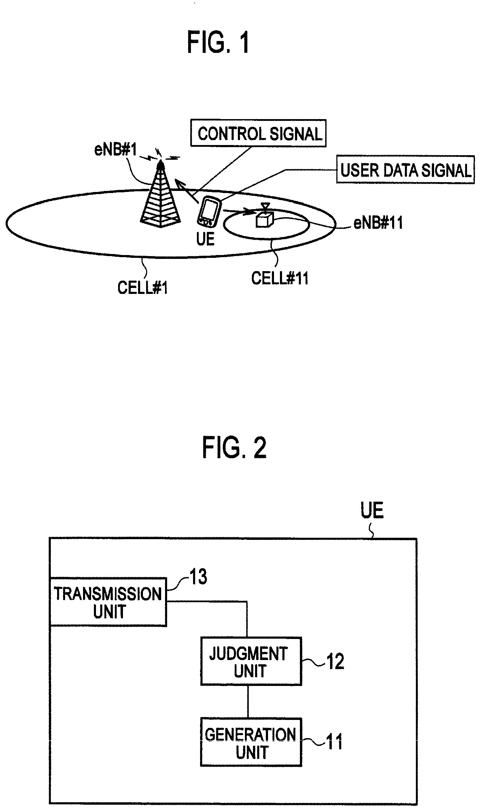

A mobile communication system according to a first background example useful for understanding the present invention is described with reference to Figs. 1 to 6.

As illustrated in Fig. 1, the mobile communication system according to this background example includes a radio base station eNB#1 that controls a cell #1 and a radio base station eNB#11 that controls a cell #11.

Here, the cell #11 is a small cell (phantom cell) and the cell #1 is a macro cell. Note that the cell #1 and the cell #11 are arranged so that the coverage area of the cell #11 and the coverage area of the cell #1 may overlap each other at least partially.

Note that the radio base station eNB#1 may be called a macro radio base station (Macro-eNB) and the radio base station eNB#11 may be called a small radio base station (Small-eNB) or a phantom radio base station (Phantom-eNB).

In addition, the mobile communication system according to this background example is an LTE mobile communication system, and the mobile station UE is configured to be capable of carrying out "inter-eNB CA."

Note that, in the mobile communication system according to this background example, the mobile station UE carries out "inter-eNB CA" via the cell #1 under control of the radio base station eNB#1 and the cell #11 under control of the radio base station eNB#11.

As illustrated in Fig. 2, the mobile station UE according to a first embodiment of the present invention includes a generation unit 11, a judgment unit 12, and a transmission unit 13.

The generation unit 11 is configured to generate signals (a user data signal and a control signal) to be transmitted by the mobile station UE.

The judgment unit 12 is configured to determine a target radio base station eNB to which the signal generated by the generation unit 11 is to be transmitted.

Here, the judgment unit 12 is configured to change a target radio base station eNB for transmission of the signal generated by the generation unit 11, on the basis of the type of the signal.

Specifically, the judgment unit 12 may be configured to set different target radio base stations eNB for transmission of a user data signal and for transmission of a control signal.

Alternatively, a radio base station eNB may be configured to designate a target radio base station for signal transmission for every signal type.

Note that the judgment unit 12 may be configured to judge that, if no such designation as to a certain signal is made by the radio base station, the certain signal is to be transmitted uniformly to a specific radio base station eNB (to an anchor radio base station eNB, for example).

Here, the anchor radio base station eNB may be a radio base station eNB which has established an interface with the CN (Core Network), may be a radio base station eNB which has an RRC layer function, or may be a radio base station eNB which has a security function.

In addition, the mobile station UE may be configured to transmit a signal uniformly to the specific radio base station eNB also when the setting (configuration) currently set is released (e.g., in a re-connection procedure or a handover procedure).

The radio base station eNB may be configured to make the designation described above by using a signal in any of the RRC layer, PDCP layer, RLC layer, MAC layer, and physical layer.

Further, the mobile station UE may notify a radio base station eNB of the number of radio base stations eNB that are settable in the mobile station UE as signal transmission targets. The notification may be made on a per-layer basis or on a per-signal-type basis.

For example, the judgment unit 12 may be configured to set the radio base station eNB#11 as a target radio base station eNB for transmission of a user data signal and set the radio base station eNB#1 as a target radio base station eNB for transmission of a control signal.

In addition, the judgment unit 12 may be configured to change a target radio base station eNB for transmission of a control signal generated by the generation unit 11, on the basis of the type of the control signal.

Here, a MAC-PDU (Protocol Data Unit) generated by the MAC (Media Access Control) layer of the generation unit 11 includes a MAC subheader and its payload (see 3GPP TS36.321).

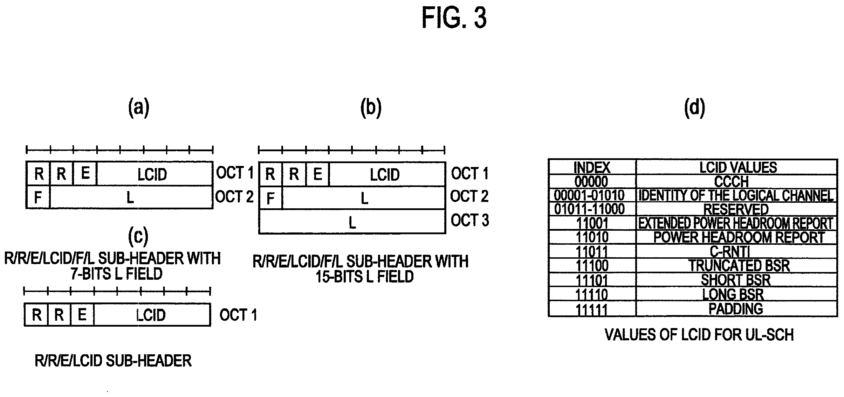

As illustrated in Figs. 3(a) to 3(c), a MAC subheader includes an LCID (Logical Channel ID) indicating which of user data and a MAC-CE (Control Element) is stored in its subsequent payload.

Thus, the judgment unit 12 is configured to judge the type of a signal generated by the generation unit 11, e.g., judge whether the signal is a user data signal which includes a MAC-PDU including user data or a control signal which includes a MAC-PDU including a MAC-CE, on the basis of the LCID in a MAC subheader.

Here, there are several types of MAC-CEs as illustrated in Fig. 3 (d). The judgment unit 12 may be configured to change a target radio base station eNB for transmission of a control signal for every type of MAC-CE, the control signal including a MAC-PDU including the MAC-CE.

Note that, as illustrated in Fig. 3(d), a MAC-PDU specified as "LCID = 00001-01010" is configured to include user data, and MAC-PDUs specified as "LCID= 11001/11010/11011/11100/11101/11110" are configured to include MAC-CEs.

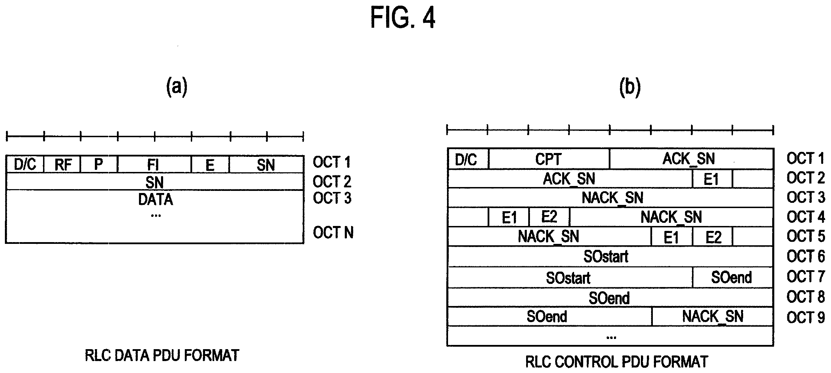

Besides, RLC-PDUs generated by the RLC (Radio Link Control) layer of the generation unit 11 are broadly classified into an "RLC data PDU (see Fig. 4(a))" and an "RLC control PDU (see Fig. 4(b))" (see 3GPP TS36.322).

As illustrated in Fig. 4(a) and Fig. 4(b), the judgment unit 12 is configured to judge the type of a signal generated by the generation unit 11, e.g., judge whether the signal is a user data signal which includes an "RLC data PDU" or a control signal which includes an "RLC control PDU," on the basis of the D/C field in the first bit of an RLC-PDU.

Here, there are several types of "RLC control PDUs. " As illustrated in Fig. 4(b), the judgment unit 12 may be configured to judge the type of "RLC control PDU" on the basis of its CPT field, and to change a target radio base station eNB for transmission of a control signal for every type of "RLC control PDU," the control signal including the "RLC control PDU."

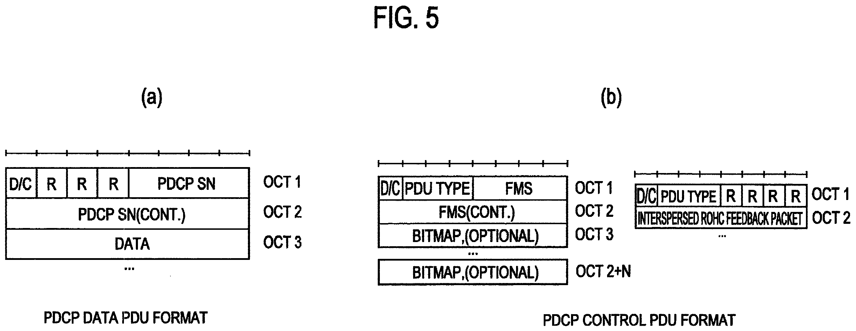

Besides, PDCP-PDUs generated by the PDCP (Packet Data Convergence Protocol) layer of the generation unit 11 are broadly classified into a "PDCP data PDU (see Fig. 5(a))" and a "PDCP control PDU (see Fig. 5(b))" (see 3GPP TS36.323).

As illustrated in Fig. 5(a) and Fig. 5(b), the judgment unit 12 is configured to judge the type of a signal generated by the generation unit 11, e.g., judge whether the signal is a user data signal which includes a "PDCP data PDU" or a control signal which includes a "PDCP control PDU," on the basis of the D/C field in the first bit of a PDCP-PDU.

Here, there are several types of "PDCP control PDUs." As illustrated in Fig. 5(b), the judgment unit 12 may be configured to judge the type of "PDCP control PDU" on the basis of its "PDU Type" field, and to change a target radio base station eNB for transmission of a control signal for every type of "PDCP control PDU," the control signal including the "PDCP control PDU."

The transmission unit 13 is configured to transmit a signal (a user data signal or a control signal) generated by the generation unit 12 to a transmission target radio base station eNB determined by the judgment unit 12.

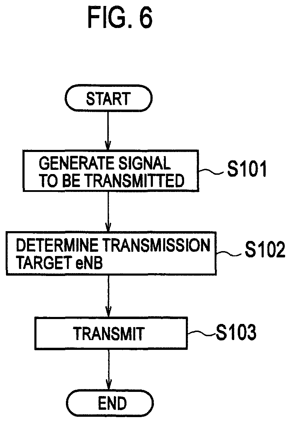

Hereinbelow, with reference to Fig. 6, description is given of the workings of the mobile communication system according to the first background example, more specifically, the workings of the mobile station UE according to the first embodiment.

As illustrated in Fig. 6, in Step S101, the mobile station UE generates a signal (a user data signal or a control signal) to be transmitted.

In Step S102, the mobile station UE determines a target radio base station eNB for transmission of the signal, on the basis of the type of the signal.

In Step S103, the mobile station UE transmits the signal based on the determination result.

### (First Modified Background Example)

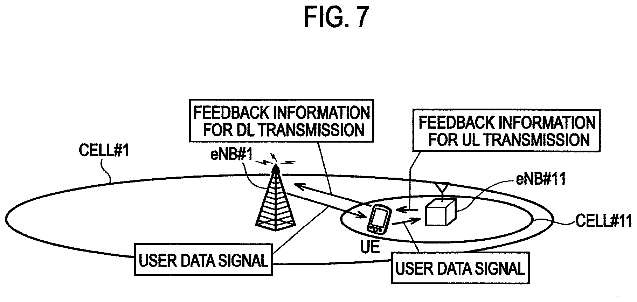

Hereinbelow, with reference to Fig. 7, a mobile communication system according to a first modified background example to the present invention is described mainly in terms of differences from the mobile communication system according to the first background example.

The mobile communication system according to the first modified background example is configured such that, in implementation of "inter-eNB CA," transmission of a user data signal in uplink and transmission of a downlink user data signal in downlink are carried out via different radio base stations eNB.

Specifically, the mobile communication system according to the first modified background example is configured such that the radio base station eNB#1 transmits a user data signal to the mobile station UE in downlink and the mobile station UE transmits a user data signal to the radio base station eNB#11 in uplink.

In other words, in downlink, a user data signal is transmitted in the cell #1 being a macro cell in which the signal is more likely to be received by the mobile station UE, and in uplink, a user data signal is transmitted to the cell #11 being a small cell so that transmission by the mobile station UE is made at low power and thereby battery saving is enabled.

In addition, in the mobile communication system according to the first modified background example, the radio base station eNB#1 and the radio base station eNB#11 respectively have schedulers and an acknowledgment signal (ACK/NACK) for each of the user data signals described above needs to be transmitted to the corresponding target for transmission of the user data signal.

Accordingly, the mobile communication system according to the first modified background example is configured such that an acknowledgment signal for the user data signal in downlink is transmitted from the mobile station UE to the radio base station eNB#1 and an acknowledgment signal for the user data signal in uplink is transmitted from the radio base station eNB#11 to the mobile station UE.

The features of the present embodiment may also be expressed as follows.

A first feature of the present embodiment is summarized as a mobile station UE including: a generation unit 11 configured to generate a signal to be transmitted; and a judgment unit 12 configured to change a target radio base station eNB for transmission of the signal based on a type of the signal.

According to the configuration described above, a target radio base station eNB for signal transmission is flexibly changed in implementation of "inter-eNB CA," thereby realizing an appropriate operation in consideration of a communication status.

In the first feature of the present embodiment, the judgment unit 12 may set different target radio base stations eNB for transmission of a user data signal and for transmission of a control signal.

According to the configuration described above, in implementation of "inter-eNB CA," the mobile station UE transmits a user data signal to the cell #11 being a small cell to reduce transmission power in the mobile station UE and realize battery saving, and transmits a control signal to the cell #1 being a macro cell to realize reliable processing on the control signal by the radio base station eNB#1.

In the first feature of the present embodiment, the judgment unit 12 may change a target radio base station eNB for transmission of the control signal based on a type of the control signal.

According to the configuration described above, a target radio base station eNB for transmission of a control signal is changed based on the type of the control signal in implementation of "inter-eNB CA," thereby realizing an appropriate operation while a communication status is taken into consideration more flexibly.

In the first feature of the present embodiment, the judgment unit 12 may judge the type of the signal based on an LCID in a MAC subheader.

According to the configuration described above, it is possible to realize an appropriate operation in consideration of a communication status without changing the existing specification.

In the first feature of the present embodiment, the judgment unit 12 may judge the type of the signal based on a D/C field in a first bit of an RLC-PDU.

According to the configuration described above, it is possible to realize an appropriate operation in consideration of a communication status without changing the existing specification.

In the first feature of the present embodiment, the judgment unit 12 may judge the type of the signal based on a D/C field in a first bit of a PDCP-PDU.

According to the configuration described above, it is possible to realize an appropriate operation in consideration of a communication status without changing the existing specification.

In the first feature of the present embodiment, the judgment unit 12 may determine a target radio base station eNB for transmission of each signal according to an instruction from a radio base station eNB.

In the first feature of the present embodiment, if the instruction as to a certain signal does not exist, the judgment unit 12 may determine a specific radio base station (anchor radio base station eNB) as a target radio base station eNB for transmission of the certain signal.

In the first feature of the present embodiment, when a setting (configuration) currently set is released, the judgment unit 12 may determine a specific radio base station (anchor radio base station eNB) as a target radio base station eNB for transmission of the signal.

In the first feature of the present embodiment, the mobile station UE may further include a transmission unit 13 configured to notify a radio base station eNB of the number of radio base stations eNB that are settable in the mobile station UE as a target radio base station eNB for transmission of the signal.

An aspect of the present disclosure is summarized as a mobile communication system including a radio base station eNB#1 (first radio base station) and a radio base station eNB#11 (second radio base station). Here, the radio base station eNB#1 controls a cell #1 (macro cell), the radio base station eNB#11 controls a cell #11 (small cell), in downlink, the radio base station eNB#1 transmits a user data signal to a mobile station UE, in uplink, the mobile station UE transmits a user data signal to the radio base station eNB#11, an acknowledgment signal (ACK/NACK) for the user data signal in the downlink is transmitted from the mobile station UE to the radio base station eNB#1, and an acknowledgment signal (ACK/NACK) for the user data signal in the uplink is transmitted from the radio base station eNB#11 to the mobile station UE.

According to the configuration described above, in downlink, security in communications can be achieved by transmitting a user data signal in the cell #1 being a macro cell in which the signal is more likely to be received by the mobile station UE, and in uplink, transmission power in the mobile station UE can be made lower and thereby battery saving can be realized.

It should be noted that the foregoing operations of the mobile stations UE and radio base stations eNB#1/eNB#11 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE and radio base stations eNB#1/eNB#11. Otherwise, the storage medium and the processor may be provided as discrete components inside the mobile stations UE and radio base stations eNB#1/eNB#11.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, defined by the appended claims. Therefore, the description of the specification is intended for illustrative explanation only and does not impose any limited interpretation on the present invention.

### INDUSTRIAL APPLICABILITY

As has been described above, the present invention can provide a mobile station and a mobile communication system capable of performing an appropriate operation in implementation of "inter-eNB CA."

### EXPLANATION OF THE REFERENCE NUMERALS

- UE: mobile station
- 11: generation unit
- 12: judgment unit
- 13: transmission unit

## Claims

1. A mobile station (UE) configured to carry out inter-eNB carrier aggregation, CA, comprising:
a generation unit (11) configured to generate a signal to be transmitted, the signal comprising a user data signal or a control signal; and
a judgment unit (12) configured to change a target radio base station for transmission of the signal based on whether the signal is the user data signal or the control signal,
wherein the judgment unit (12) sets target radio base station (eNB#11) for transmission of the user data signal and different target radio base station (eNB#1) for transmission of the control signal, and
**characterized in that** the judgment unit (12) changes a target radio base station for transmission of the control signal on the basis of a type of the control signal generated by the generation unit (11), wherein the type of the control signal includes a type of radio link control, RLC, control protocol data unit, PDU, or a type of packet data convergence protocol, PDCP, control PDU.

2. The mobile station (UE) according to claim 1, wherein the judgment unit (12) judges the type of the signal based on an logical channel ID, LCID, media access control, MAC, subheader.

3. The mobile station (UE) according to claim 1, wherein the judgment unit (12) judges the type of the signal based on a D/C field in a first bit of an RLC-PDU.

4. The mobile station (UE) according to claim 1, wherein the judgment unit (12) judges the type of the signal based on a D/C field in a first bit of a PDCP-PDU.

5. The mobile station (UE) according to any one of claims 1 to 4, wherein, when a setting currently set is released, the judgment unit (12) determines a specific radio base station as a target radio base station for transmission of the signal.

6. The mobile station (UE) according to any one of claims 1 to 5, further comprising a transmission unit (13) configured to notify a radio base station of the number of radio base stations that are settable in the mobile station (UE) as a target radio base station for transmission of the signal.

## Patentansprüche

1. Mobilstation (UE), die konfiguriert ist, um Inter-eNB-Trägeraggregation, CA, durchzuführen, umfassend:
eine Erzeugungseinheit (11), die konfiguriert ist, um ein zu sendendes Signal zu erzeugen, wobei das Signal ein Benutzerdatensignal oder ein Steuersignal umfasst; und
eine Beurteilungseinheit (12), die konfiguriert ist, um eine Ziel-Funkbasisstation zum Senden des Signals zu ändern, je nachdem, ob das Signal das Benutzerdatensignal oder das Steuersignal ist,
wobei die Beurteilungseinheit (12) eine Ziel-Funkbasisstation (eNB#11) zum Senden des Benutzerdatensignals und eine andere Ziel-Funkbasisstation (eNB#1) zum Senden des Steuersignals einstellt, und
**dadurch gekennzeichnet, dass** die Beurteilungseinheit (12) eine Ziel-Funkbasisstation zum Senden des Steuersignals auf der Grundlage eines Typs des von der Erzeugungseinheit (11) erzeugten Steuersignals ändert, wobei der Typ des Steuersignals einen Typ der Funkverknüpfungssteuerungs-, RLC-, Steuerprotokolldateneinheit, PDU, oder einen Typ der Paketdatenkonvergenzprotokoll-, PDCP-, Steuer-PDU, einschließt.

2. Mobilstation (UE) nach Anspruch 1, wobei die Beurteilungseinheit (12) den Typ des Signals auf der Grundlage einer logischen Kanal-ID, LCID, in einem Medienzugangskontroll-, MAC-, Subheader beurteilt.

3. Mobilstation (UE) nach Anspruch 1, wobei die Beurteilungseinheit (12) den Typ des Signals auf der Grundlage eines D/C-Feldes in einem ersten Bit einer RLC-PDU beurteilt.

4. Mobilstation (UE) nach Anspruch 1, wobei die Beurteilungseinheit (12) den Typ des Signals auf der Grundlage eines D/C-Feldes in einem ersten Bit einer PDCP-PDU beurteilt.

5. Mobilstation (UE) nach einem der Ansprüche 1 bis 4, wobei, wenn eine aktuell eingestellte Einstellung freigegeben wird, die Beurteilungseinheit (12) eine bestimmte Funkbasisstation als Ziel-Funkbasisstation für das Senden des Signals bestimmt.

6. Mobilstation (UE) nach einem der Ansprüche 1 bis 5, weiter eine Sendeeinheit (13) umfassend, die konfiguriert ist, um einer Funkbasisstation die Anzahl der Funkbasisstationen mitzuteilen, die in der Mobilstation (UE) als Ziel-Funkbasisstation für das Senden des Signals einstellbar sind.

## Revendications

1. Station mobile (UE) configurée pour réaliser une agrégation de porteuses, CA, inter-eNB, comprenant :
une unité de génération (11) configurée pour générer un signal à transmettre, le signal comprenant un signal de données d'utilisateur ou un signal de commande ; et
une unité de jugement (12) configurée pour changer une station de base radio cible pour une transmission du signal sur la base du signal qui est le signal de données d'utilisateur ou le signal de commande,
dans laquelle l'unité de jugement (12) règle une station de base radio cible (eNB#11) pour une transmission du signal de données d'utilisateur et une station de base radio cible différente (eNB#1) pour une transmission du signal de commande, et
**caractérisée en ce que** l'unité de jugement (12) change une station de base radio cible pour une transmission du signal de commande sur la base d'un type du signal de commande généré par l'unité de génération (11), dans laquelle le type du signal de commande inclut un type d'unité de données de protocole, PDU, de commande de commande de liaison radio, RLC, ou un type de PDU de commande de protocole de convergence de données par paquets, PDCP.

2. Station mobile (UE) selon la revendication 1, dans laquelle l'unité de jugement (12) juge le type du signal sur la base d'un ID de canal logique, LCID, dans un sous-en-tête de commande d'accès au support, MAC.

3. Station mobile (UE) selon la revendication 1, dans laquelle l'unité de jugement (12) juge le type du signal sur la base d'un champ D/C dans un premier bit d'une RLC-PDU.

4. Station mobile (UE) selon la revendication 1, dans laquelle l'unité de jugement (12) juge le type du signal sur la base d'un champ D/C dans un premier bit d'une PDCP-PDU.

5. Station mobile (UE) selon l'une quelconque des revendications 1 à 4, dans laquelle, quand un réglage actuellement réglé est libéré, l'unité de jugement (12) détermine une station de base radio spécifique comme une station de base radio cible pour une transmission du signal.

6. Station mobile (UE) selon l'une quelconque des revendications 1 à 5, comprenant en outre une unité de transmission (13) configurée pour notifier à une station de base radio le nombre de stations de base radio qui peuvent être réglées dans la station mobile (UE) comme une station de base radio cible pour une transmission du signal.
